# NEUE EUROPÄISCHE PATENTSCHRIFT

(11) **EP 2 433 875 B2**
(45) Veröffentlichungstag und Bekanntmachung des Hinweises auf die Entscheidung über den Einspruch: **11.01.2017**
(45) Hinweis auf die Patenterteilung: 24.04.2013
(21) Anmeldenummer: 11182613.7
(22) Anmeldetag: 23.09.2011
(51) Int. Cl.: B65B 59/04, B65B 5/08, B65B 35/36, B65B 35/44, B25J 15/04, B25J 9/00, G05B 19/418

(54) **Verpackungsmaschine**
Packaging machine
Machine d'emballage

(30) Priorität: 24.09.2010 DE 102010041389
(43) Veröffentlichungstag der Anmeldung: 28.03.2012
(73) Patentinhaber: R. Weiss Verpackungstechnik GmbH & Co. KG, 74564 Crailsheim (DE)
(72) Erfinder: Weiss, Reinald, 91626 Schopfloch (DE)
(74) Vertreter: Schlief, Thomas P.

(56) Entgegenhaltungen:
- DE-A1- 10 064 217
- DE-A1- 10 147 361
- US-A- 5 239 807

## Beschreibung

Die Erfindung betrifft eine Verpackungsmaschine mit einem Rahmengestell mit in den Innenraum des Rahmengestells mündenden Anlieferbereichen für zu verpackende Produkte einerseits und für Packmaterial andererseits und einem den Innenraum des Rahmengestells verlassenden Abförderbereich für die in das Packmaterial eingebrachten Produkte sowie mit mindestens einem innerhalb des Rahmengestells verfahrbaren Roboter, an dem unterschiedliche, wechselbare Werkzeuge ankoppelbar sind, wobei die jeweiligen Werkzeuge zum Aufnehmen von mindestens einem, vorzugsweise mehreren der angelieferten Produkte und zu deren Einlegen in das besagte Packmaterial ausgebildet sind.

Derartige Verpackungsmaschinen sind vielfältig bekannt. Sie dienen in vielen Bereichen zum Verpacken von einzelnen Produkten in größeren Einheiten in beispielsweise Kartons. Solche Produkte sind z.B. Tuben, Dosen, Zigaretten, Pharmazeutika, usw. Bekannte Verpackungsmaschinen sind hierzu mit mindestens einem Roboter ausgestattet, an dessen freiem Ende ein Werkzeug montiert wird, das zur gleichzeitigen Aufnahme von mehreren Produkten und zum Transfer in einen Karton o.ä. ausgebildet ist. Wenn ein Wechsel hin zum Verpacken von Produkten anderer Größe und/oder Geometrie ansteht, wird das zuvor verwendete Werkzeug gegen ein anderes passendes Werkzeug ausgetauscht. Hierzu wird ein Werkzeugmodulwagen mit dem entsprechenden neuen Werkzeug neben die Verpackungsmaschine gefahren, eine im Rahmen der Maschine befindliche Tür geöffnet, das alte Werkzeug abmontiert und auf dem Wagen abgeladen und dann das neue Werkzeug an dem Roboter montiert. Zu diesem Vorgang sind zumeist zwei Bedienpersonen notwendig, da die Werkzeuge ca. 25-50 kg, vereinzelt sogar mehr als 150 kg, wiegen. Auch ist der Zeitaufwand beträchtlich.

DE-A-101 47 361 beschreibt eine verpackungsmaschine, die mittels einem Roboter Produkte in Kartons verpackt. Der Roboter ist mit einem auswechselbaren werkzeug ausgerüstet. Bei einem werkzeugwechsel werden werkzeugköpfe für den Roboter an den jeweiligen Längspositionen der Roboter an die Maschine durch einen werkzeugwechsler herangeführt. Der Roboter ist dann in der Lage, das bisher am Roboterarm befindliche werkzeug auf einem solchen werkzeugwechsler nach dem Lösen vom Roboterarm abzulegen und dafür ein anderes, vom werkzeugwechsler angebotenes werkzeug zu ergreifen und am Roboterarm zu befestigen, was insgesamt mannlos und durch die Steuerung der Maschine bewirkt vonstatten gehen kann.

Es ist Aufgabe der vorliegenden Erfindung, einen Werkzeugwechsel bei der eingangs genannten Verpackungsmaschine einfacher und mit geringerem Aufwand durchführen zu können.

Diese Aufgabe wird durch die Merkmale des Anspruchs 1 gelöst.

Die Vorteile der Erfindung sind insbesondere darin zu sehen, dass ein automatischer Werkzeugwechsel vorgenommen werden kann. Der Mannbedarf ist somit äußerst gering. Durch die Steuerung, vorzugsweise bedient über eine Bedienertafel an der Maschine, ist lediglich der Befehl zum betreffenden Werkzeugwechsel zu geben. Der Roboter verfährt dann in eine Ablegeposition zum Ablegen und Abkuppeln des nicht mehr gebrauchten Werkzeugs. Danach verfährt er in eine Aufnahmeposition zum Ankuppeln und Aufnehmen des gewünschten Werkzeugs. In der Zwischenzeit kann schon mit der Anlieferung der neuen Produkte und auch der neuen Verpackungen, soweit gewünscht, begonnen werden. Insgesamt ist der zeitliche und personelle Aufwand beträchtlich geringer als bei einem manuellen Werkzeugwechsel. Auch fällt eine Verletzungsgefahr für involvierte Personen fort.

Die Halterungen sind mit dem Rahmengestell verbunden. Das Gestell besteht üblicherweise aus Stahl und ist somit äußerst robust und stabil ausgeführt, um die verschiedenen Werkzeuge aufnehmen zu können. Auch schwere Werkzeuge lassen sich hier während ihres Nichtgebrauchs sicher und zudem exakt positioniert aufbewahren. Eine genaue Positionierung ist notwendig, damit der Roboter die Werkzeuge exakt anfahren kann.

Gemäß der Erfindung sind die Halterungen in der oberen Hälfte des Rahmengestells angeordnet. Da die Anlieferung der zu verpackenden Produkte und der Abtransport der gefüllten Verpackungen zumeist unterhalb dieses Bereichs erfolgt, steht bei der genannten Weiterbildung genügend Raum für die Lagerung der momentan nicht verwendeten Werkzeuge zur Verfügung.

Bei einer Weiterbildung der Erfindung sind die Halterungen an mindestens einem mit dem Rahmengestell verbundenen Trägerprofil angeordnet. Dieses ragt vorzugsweise über den besagten oberen Rahmenrand, da in Maschinenhallen üblicherweise nach oben hin genügend Platz vorhanden ist und somit eine kompakte Bauweise der Maschine bei unveränderter Stellfläche gewährleistet bleibt. Somit können auch größere Werkzeuge von der Maschine gelagert und verwendet werden.

Die Werkzeuge sind derart in den Halterungen platzierbar, dass der mindestens eine Roboter von unten an das zweite Kupplungselement ankoppelt, während vorzugsweise das zweite Kupplungselement beim Verpacken der Produkte nach oben und die Arbeitselemente nach unten weisen. Das Werkzeug wird demnach nach Ankupplung durch den Roboter um 180° nach unten geschwenkt, um den Verpackungsvorgang zu starten.

Bevorzugt weisen die Halterungen Auflageflächen auf, auf denen die Werkzeuge stirnseitig abgelegt werden können. Hierbei ist es bevorzugt, wenn die Arbeitselemente des Werkzeugs, welche die Produkte aufnehmen, nach oben ragen, so dass der erste Kupplungsabschnitt des Roboters von unten an den zweiten Kupplungsabschnitt des Werkzeugs, der an einem frei zugänglichen mittleren Abschnitt des Werkzeugs vorgesehen ist, ankoppeln kann. Anschließend kann der Roboter das Werkzeug von den Auflageflächen der Halterungen anheben und zu den zu verpackenden Produkten verfahren. Beim Ablegen eines nicht mehr benutzten Werkzeugs wird dieses vom Roboter von oben auf die Auflageflächen abgesetzt. Weitere zu den Halterungen gehörende Halteeinrichtungen bzw. -flächen sind selbstverständlich ebenfalls möglich.

Die Werkzeuge sind beispielsweise derart ausgebildet, dass an mindestens einem flächig und länglich ausgebildeten Trägerelement, welches bei in der Halterung lagerndem Zustand senkrecht positioniert ist, links und rechts die einzelnen Arbeitselemente (beispielsweise Saugrohre oder Greifinstrumente) befestigt sind. Vorzugsweise werden die Stirnseiten dieses mindestens einen Trägerelements auf den Auflageflächen der Halterungen positioniert.

Die Kupplung zwischen dem ersten Kupplungselement und dem zweiten Kupplungselement erfolgt vorteilhafterweise pneumatisch, da auf diese Weise eine sichere, schnelle, leicht zu steuernde und zudem günstige Kupplung zur Verfügung gestellt werden kann.

Vorteilhafterweise wird bei geschlossener Kupplung das jeweilig angeschlossene Werkzeug über durch die zusammen mit der Kupplung geschlossene elektrische Kontakte mit elektrischer Spannung versorgt. Es ist weiterhin bevorzugt, wenn bei geschlossener Kupplung Signalleitungen miteinander verbunden werden, um Steuersignale an die agierenden Elemente des Werkzeugs übermitteln zu können, beispielsweise Ventile zum Ansaugen bzw. Loslassen von Produkten im Laufe des Verpackungsvorgangs.
Die Signalübermittlung kann einerseits durch herkömmliche elektrische Kontakte realisiert werden. Mit Vorteil kann diese alternativ berührungslos erfolgen, beispielsweise durch Funk oder Licht oder andere dem Fachmann geläufige Methoden.

Die Kupplung zwischen dem ersten und dem zweiten Kupplungselement ist bevorzugt selbstsichernd ausgebildet. Zudem kann vorzugsweise der Zustand der Kupplung, z.B. Kupplung geschlossen oder offen, abgefragt und vorteilhafterweise durch eine Signaleinrichtung optisch oder akustisch wiedergegeben wird. Insbesondere eine fehlerhafte Ankopplung des ersten Kupplungselements an das Werkzeug kann ein Alarmsignal auslösen.

Mit Vorteil ist der mindestens eine Roboter hängend angeordnet, insbesondere an einem oberen Rahmenteil der Verpackungsmaschine. Durch diese Überkopfpositionierung ist eine sehr gute Zugänglichkeit des Maschineninnenraums (auch als Roboterzelle bezeichenbar) über große Türen sowie ein optimaler Zugang zu den Anlagenmodulen bei gleichzeitig guter Einsicht in die Produktionsprozesse gewährleistet. Außerdem lässt sich eine sehr hohe Flexibilität durch beliebige Zufuhr von Produkten und Packmaterial von allen Seiten realisieren.

Gemäß einer Alternative kann der mindestens eine Roboter auch auf dem Boden oder an einem anderen Abschnitt des Rahmengestells befestigt sein. Auch ist es möglich, einen Roboter hängend und einen anderen nichthängend anzuordnen.

Die Werkzeuge sind vorteilhafterweise zum Ansaugen oder Ergreifen der Produkte ausgebildet.

Gemäß einer möglichen Ausgestaltung der erfindungsgemäßen Verpackungsmaschine ist diese zum Verpacken von beispielsweise Tuben ausgebildet. Diese werden bevorzugt auf einem Transportband, beispielsweise einem Längsförderer, in den Rahmen der Maschinen (Roboterzelle) angeliefert und dort beispielsweise nebeneinander angeordnet, beispielsweise durch einen Querförderer. Gemäß einer bevorzugten Weiterbildung dieser Ausgestaltung können mehrere nebeneinander liegenden Tuben durch eine entsprechende Einrichtung mit der flachen Stirnseite aufgerichtet und in dieser Position von dem Werkzeug angesaugt werden. Hierzu kann das Werkzeug zweckmäßigerweise mehrere Saugrohre mit einer passend ausgebildeten Saugmündung aufweisen. Nach Überführen der Mehrzahl gleichzeitig ergriffener Tuben verfährt der Roboter das Werkzeug oberhalb eines Kartons und senkt anschließend die Tuben in dessen Innenraum, um danach die Saugleistung derart herabzusetzen, dass die Saugmündungen die Tuben freigeben. Bei insbesondere kleineren Tuben können diese auch im liegenden Zustand mit als Zangen ausgebildeten Arbeitselementen ergriffen und in die Verpackungen eingelegt werden.

Die Erfindung ist nicht auf die Verpackung von Tuben eingeschränkt. An deren Stelle können selbstverständlich auch andere Produkte (Lebensmittel, elektronische Bauteile, Pharmazeutika, usw.) mittels der erfindungsgemäßen Maschine verpackt werden.

Vorzugsweise ist der erfindungsgemäßen Verpackungsmaschine ein Kartonaufrichter beigestellt, der angelieferte Vollkarton- und Wellpappezuschnitte aufrichtet und der Verpackungsmaschine zuführt. Hierdurch kann eine platzsparende und effiziente Verpackungsstraße realisiert werden.

Vorteilhafte Weiterbildungen der Erfindung sind durch die Merkmale der Unteransprüche bestimmt. Im Folgenden wird die Erfindung anhand von Figuren näher erläutert. Es zeigen:
- **Figur 1**: eine Aufsicht auf eine schematisch dargestellte Verpackungsmaschine (ohne die oberen Horizontalprofile);
- **Figur 2**: eine schematische Seitenansicht auf das Rahmengestell, die Halterungen und den Roboter der Verpackungsmaschine, und
- **Figur 3**: eine schematische Seitenansicht ähnlich der Figur 2, hier mit angekuppeltem Werkzeug und Transportbändern.

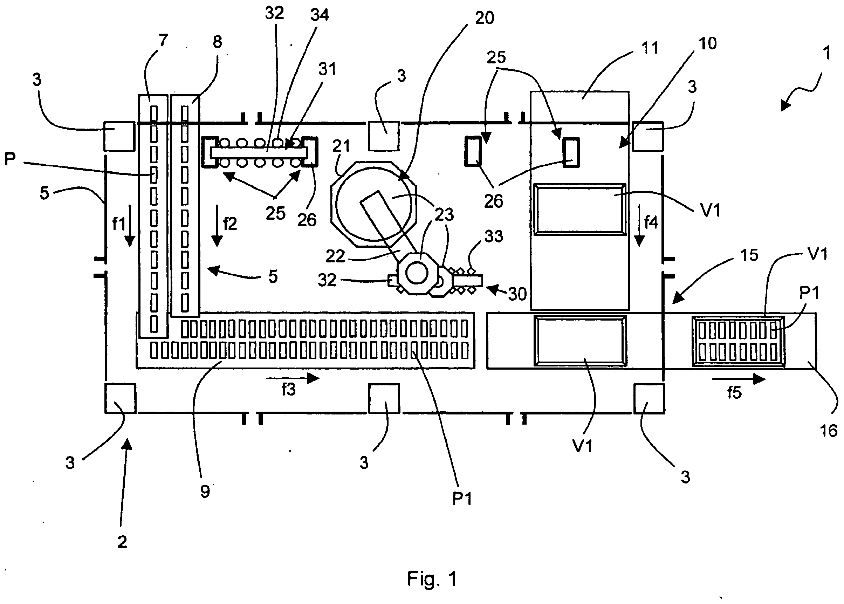

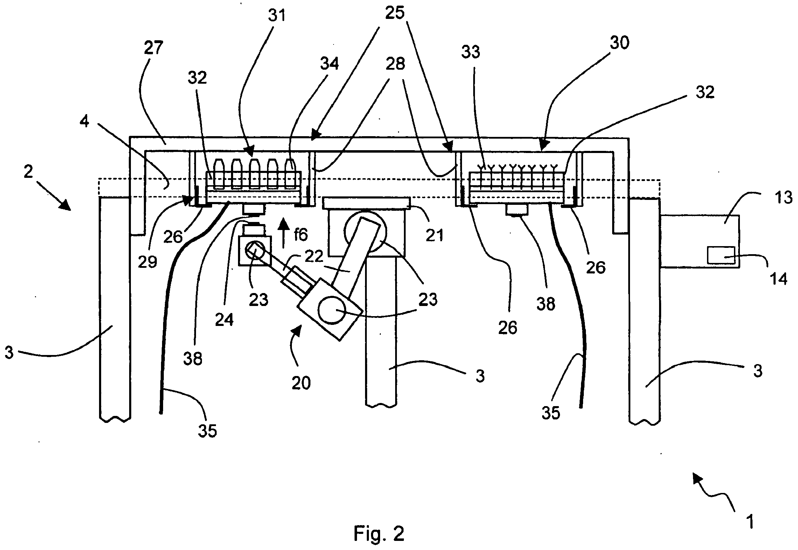

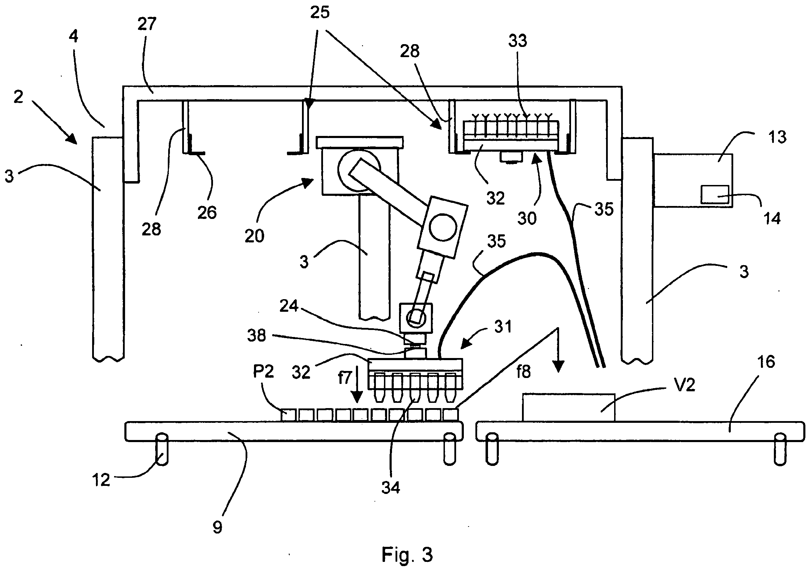

In den Figuren ist eine erfindungsgemäße Verpackungsmaschine 1 in stark vereinfachter Form dargestellt. In der Figur 1 ist die Maschine 1 von oben wiedergegeben, wobei obere Elemente der Maschine 1 nicht dargestellt sind. Die Maschine 1 weist ein Rahmengestell 2 aus vorzugsweise Stahl auf, das in der Hauptsache aus sechs Vertikalprofilen 3 und in den Figuren 2 und 3 angedeuteten oberen Horizontalprofilen 4 besteht. Die Vertikalprofile 3 stehen an den vier Ecken der Maschine 1 und in der Mitte der Maschinenlängsseiten. Die von den Vertikalprofilen 3 gebildeten Zwischenräume sind mit nach außen verschwenkbaren Türen 5 verschlossen, die einen Zugang zur Maschine 1 von allen vier Seiten gestatten. Außerdem erlaubt diese Ausgestaltung den flexiblen Aufbau von unterschiedlichen Anförder- und Abtransporteinrichtungen.

In den Innenraum der Maschine 1 münden vorliegend ein erstes und ein zweites Lieferband 7, 8, die als auf Füßen stehende Endlosförderer ausgebildet sind und parallel zueinander in einem Anlieferbereich 6 der Maschine 1 angeordnet sind. Beide Lieferbänder 7, 8 transportieren vereinzelte, zu mehreren zu verpackende Produkte P von außen in den Innenraum des Rahmengestells 2 (s. Pfeile f1 und f2). Am Ende der Lieferbänder 7, 8 ist quer zu diesen ein auf Füßen 12 (s. Figur 3) stehender Querförderer 9 angeordnet, der im vorliegenden Ausführungsbeispiel als Kettenförderer ausgebildet ist. Die Produkte P, beispielsweise Tuben, werden in die Mulden der Kettenglieder abgelegt bzw. rollen in diese, mit dem Effekt, dass die Produkte P auf dem Querförderer 9 einen definierten Abstand zueinander haben. Da die Lieferbänder 7, 8 versetzt auslaufen, werden die Produkte P in zwei Reihen und exakt positioniert auf dem Querförderer 9 zu einem Bereich der Maschine 1 transportiert (s. Pfeil f3), in dem sie verpackt werden können.

In einem weiteren Anförderbereich 10 ist ein Lieferband 11 für leeres Packmaterial V, beispielsweise Kartonage, vorgesehen (s. Pfeil f4). Dem Lieferband 11 kann ein Kartonaufrichter vorgeschaltet sein, der angelieferte Vollkarton- und Wellpappezuschnitte aufrichtet und der Verpackungsmaschine 1 zuführt.

Des weiteren ist in einem Abförderbereich 15 ein Abförderband 16 vorgesehen, welches die mit Produkten P gefüllten Verpackungen V abtransportiert (s. Pfeil f5). Die Bänder 11, 16 sind vorzugsweise Endlosbänder.

Für den eigentlichen Verpackungsvorgang ist ein Roboter 20 vorgesehen, der gemäß dem dargestellten Ausführungsbeispiel an einem oder mehreren, an der Oberseite der Maschine 1 verlaufenden Horizontalprofilen 4 befestigt ist (in den Figuren 2 und 3 gestrichelt angedeutet). Statt eines Roboters 20 können auch mehrere Roboter in dem Rahmengestell 2 angeordnet sein. Der Roboter 20 kann drei bis sechs Freiheitsgerade aufweisen. Er umfasst vorliegend einen Sockel 21, vorzugsweise teleskopierbare Roboterarme 22 sowie Rotations- und Translationseinrichtungen 23. Die verschiedenen Ausgestaltungs- und Funktionsmöglichkeiten sind dem Fachmann bekannt und nicht Gegenstand dieser Erfindung; es wird daher nicht näher auf diesbezügliche Einzelheiten eingegangen.

Am freien Ende des Roboters 20 ist eine Werkzeugaufnahme mit einem ersten Kupplungselement 24 vorgesehen, welches mit jeweils einem zweiten Kupplungselement 38, das an jeweils unterschiedlichen Werkzeugen 30, 31 vorgesehen ist, unter Bildung einer vorzugsweise selbstsichernden Kupplung kuppelbar ist, bevorzugt mit pneumatischen Mitteln.

In der Figur 1, welche den Roboter 20 von oben zeigt, ist ein an dem freien Roboterarm angeordnetes Werkzeug 30 angekuppelt (nach unten gerichtet und daher teilweise verdeckt dargestellt).

Die verschiedenen Werkzeuge 30, 31 dienen dazu, unterschiedliche Produkte P1, P2 (s. Figuren 1 und 3) mit derselben Maschine 1 verpacken zu können. Aufgrund der Größe, Geometrie und Schwere der verschiedenen Produkte P1, P2 sind hierzu unterschiedliche Arbeitselemente 33, 34 an den verschiedenen Werkzeugen 30, 31 für eine jeweils optimale Verpackung notwendig. Die jeweiligen Arbeitselemente 33, 34 einerseits und das jeweilige zweite Kupplungselement 38 andererseits sind auf sich gegenüberliegenden Seiten (Unter- bzw. Oberseite) des Werkzeugs 30 bzw. 31 angeordnet.

Gemäß dem vorliegenden Ausführungsbeispiel weist ein erstes Werkzeug 30 als Arbeitselemente 33 sechszehn kleine Zangen auf, welche zu jeweils acht Stück links und rechts eines Trägerelements 32 angeordnet sind und jeweils ein Produkt P1 ergreifen können (s. Figur 1). Ein zweites Werkzeug 31 weist insgesamt zehn als Saugrohre ausgebildete Arbeitselemente 34 auf, die ebenfalls zu beiden Seiten eines Trägerelements 32 angeordnet sind. Zu beiden Werkzeugen 30, 31 führt jeweils ein Pneumatikschlauch 35, um die Arbeitselemente 33, 34 mit Druckluft zu beaufschlagen. Auch kann die Druckluft zur Sicherung der Kupplung zwischen dem ersten und dem zweiten Kupplungselement 24, 38 verwendet werden. Elektrische Strom- und Steuerleitungen sind vorliegend der Übersichtlichkeit halber nicht dargestellt. Bei Kupplung mit dem Werkzeug 30 bzw. 31 werden entsprechende elektrische Kontaktschlüsse hergestellt. Steuerbefehle lassen sich vorzugsweise auch berührungslos an die Arbeitselemente übermitteln, beispielsweise mittels Funk.

Erfindungsgemäß sind mehrere, vorliegend zwei, Halterungen 25 vorgesehen, die zur Aufnahme von jeweils mindestens einem Werkzeug 30, 31 ausgebildet sind. Die beabstandeten, vorliegend auf einer Höhe angeordneten Halterungen 25 sind gemäß dem dargestellten Ausführungsbeispiel an mindestens einem U-förmigen Trägerprofil 27 befestigt (s. Figuren 2 und 3), die an den Vertikalprofilen 3 angeschraubt und/oder angeschweißt sind. Das Trägerprofil 27 ragt hierbei nach oben über das Rahmengestell 2 der Maschine 1 hinaus. An dem mindestens einen Trägerprofil 27 sind nach unten in den Innenraum des Rahmengestells 2 ragende Hängeprofile 28 befestigt, an denen wiederum zueinander gerichtete Winkel 28 mit waagerechten Aufnahmeflächen 26 montiert sind. Zu jeweils einer Halterung 25 gehören vorliegend zwei sich gegenüberliegende Hängeprofile 28 mit jeweils einem Winkel 29, deren Auflageflächen 26 sich auf gleicher Höhe gegenüber liegen.

Die beiden Werkzeuge 30, 31 lassen sich mit den Stirnseiten ihrer Trägerelemente 32 auf den Auflageflächen 26 absetzen. Hierbei weisen gemäß der dargestellten Ausführungsform die Arbeitselemente 33, 34 nach oben, während das jeweilige zweite Kupplungselement 38 nach unten weist und daher von unten für das erste Kupplungselement 24 des Roboters 20 zugänglich ist. Diese Situation ist in der Figur 2 dargestellt.

Die Steuerung des Roboters 20 einschließlich der Ankupplung an die beiden Werkzeuge 30, 31 erfolgt über eine nur schematisch angedeutete Steuerung 14, die vorliegend in dem Gehäuse einer Bedientafel 13 angeordnet ist. Steuerungskabel o.ä. - ebenso wie Stromversorgungskabel - sind der Übersichtlichkeit halber nicht dargestellt. Der Bediener kann über die Bedientafel 13 der Steuerung 14 die Anweisung geben, einen automatischen Werkzeugwechsel durchzuführen. Ein solcher ist in den Figuren 1-3 angedeutet.

In der Figur 1 ist das Werkzeug 30 mit den zangenartigen Arbeitselementen 33 an dem Roboter 20 angekuppelt, um die Produkte P1 in Verpackungen V1 einzulegen, die über das Lieferband 11 angefördert werden. Es sei nun angenommen, dass andere Produkte P2 in andere Verpackungen V2 (s. Figur 3) verpackt werden sollen. Hierzu ist ein Wechsel des Werkzeugs 30 gegen das Werkzeug 31 notwendig.

Hierzu wird zunächst das Werkzeug 30 um 180° nach oben geschwenkt und zu einer nicht besetzten (in den Figuren rechten) Halterung 25 verfahren, um dort auf den Auflageflächen 26 abgesetzt zu werden. Anschließend werden die beiden Kupplungselemente 24, 38 getrennt und der Roboter 20 zur Halterung 25 verfahren, in der das zweite Werkzeug 31 lagert.

Das erste Kupplungselement 24 des Roboters 20 fährt langsam noch oben, bis es das zweite Kupplungselement 38 des zweiten Werkzeugs 31 erreicht und andockt (s. Pfeil f6 in der Figur 2). Durch Druckluftbeaufschlagung über den Pneumatikschlauch 35 wird die Kupplung geschlossen. Daraufhin hebt der Roboter 20 das Werkzeug 31 aus der Halterung 25 und fährt dieses unter Schwenken des Werkzeugs 31 um 180° zu den als nächstes zu verpackenden, vorteilhafterweise schon angelieferten Produkten P2. Auch die Verpackungen V2 werden vorzugsweise schon angeliefert. Das Absenken des Werkzeugs 31, deren Arbeitselemente 34 vorliegend Saugrohre sind, ist in der Figur 3 durch den Pfeil f7 angedeutet, während das sich anschließende Einlegen in die Verpackung V2 durch den geknickten Pfeil f8 dargestellt ist.

Die Erfindung ist nicht auf das dargestellte Ausführungsbeispiel beschränkt. So ist es beispielsweise möglich, mehr als einen Roboter in dem Rahmengestell der Maschine unterzubringen, die zudem hängend und/oder auf dem Boden oder Bodenprofilen aufstehend angeordnet sein können. Auch sind die Halterungen direkt an dem Rahmengestell anordenbar. Auch können mehrere Werkzeuge an einem Roboter ankuppelbar sein, die dann einzelnen oder zusammen gegen andere Werkzeuge entsprechend der Erfindung gesteuert austauschbar sind.

### Bezugszeichenliste

- 1: Verpackungsmaschine
- 2: Rahmengestell
- 3: Vertikalprofil
- 4: Horizontalprofil
- 5: Tür
- 6: Anlieferbereich (Produkte)
- 7: Erstes Lieferband (Produkte)
- 8: Zweites Lieferband (Produkte)
- 9: Querförderer (Produkte)
- 10: Anlieferbereich (Packmaterial)
- 11: Lieferband (Packmaterial)
- 12: Fuß
- 13: Bedientafel
- 14: Steuerung
- 15: Abförderbereich
- 16: Abförderband (Packmaterial mit Produkten)
- 20: Roboter
- 21: Sockel
- 22: Roboterarme
- 23: Rotations- und Translationseinrichtungen
- 24: Erstes Kupplungselement
- 25: Halterung
- 26: Auflageflächen
- 27: Trägerprofil
- 28: Hängeprofil
- 29: Winkel
- 30: Erstes Werkzeug
- 31: Zweites Werkzeug
- 32: Trägerelement
- 33: Arbeitselemente des ersten Werkzeugs
- 34: Arbeitselemente des zweiten Werkzeugs
- 35: Pneumatikschlauch
- 38: Zweites Kupplungselement

## Patentansprüche

1. Verpackungsmaschine (1) mit einem Rahmengestell (2), mit in den Innenraum des Rahmengestells (2) mündenden Anlieferbereichen (6, 10) für zu verpackende Produkte (P) einerseits und für Packmaterial (V) andererseits und einem den Innenraum des Rahmengestells (2) verlassenden Abförderbereich (15) für die in das Packmaterial (V) eingebrachten Produkte (P) sowie mit mindestens einem innerhalb des Rahmengestells (2) verfahrbaren Roboter (20), an dem unterschiedliche, wechselbare Werkzeuge (30, 31) ankoppelbar sind, wobei die jeweiligen Werkzeuge (30, 31) zum Aufnehmen von mindestens einem, vorzugsweise mehreren der angelieferten Produkte (P) und zu deren Einlegen in das besagte Packmaterial (V) ausgebildet sind, und an den mindestens einen Roboter (20) ein erstes Kupplungselement (24) befestigt ist, welches mit jeweils einem zweiten Kupplungselement (38) eines jeweiligen Werkzeugs (30, 31) unter Bildung einer Kupplung kuppelbar ist, und dass eine elektronische Steuerung (14) vorgesehen ist, welche das Kuppeln und Lösen des ersten mit dem jeweiligen zweiten Kupplungselement (24, 38) steuert, **dadurch gekennzeichnet, dass** Halterungen (25) zum Lagern von momentan nicht zum Verpacken verwendeten Werkzeugen (30, 31) innerhalb des Rahmengestells (2) angeordnet sind, dass die Halterungen (25) mit dem Rahmengestell (2) verbunden sind, dass die Halterungen (25) im Bereich der oberen Hälfte des Rahmengestells (2) angeordnet sind, und dass die Werkzeuge (30, 31) derart in den Halterungen (25) platzierbar sind, dass der mindestens eine Roboter (20) von unten an das zweite Kupplungselement (38) ankoppelt.

2. Verpackungsmaschine nach Anspruch 1, **dadurch gekennzeichnet, dass** die Halterungen (25) an mindestens einem mit dem Rahmengestell (2) verbundenen Trägerprofil (27) angeordnet sind.

3. Verpackungsmaschine nach einem der vorhergehenden Ansprüche, **dadurch gekennzeichnet, dass** das mindestens eine Trägerprofil (27) über das Rahmengestell (2) hinausragt.

4. Verpackungsmaschine nach einem der vorhergehenden Ansprüche, **dadurch gekennzeichnet, dass** das zweite Kupplungselement (38) beim Verpacken der Produkte (P) nach oben und die Arbeitselemente (33, 34) nach unten weisen.

5. Verpackungsmaschine nach einem der vorhergehenden Ansprüche, **dadurch gekennzeichnet, dass** die Halterungen (25) Auflageflächen (26) umfassen, auf denen die Werkzeuge (30, 31) vorzugsweise stirnseitig absetzbar sind.

6. Verpackungsmaschine nach einem der vorhergehenden Ansprüche, **dadurch gekennzeichnet, dass** die Werkzeuge (30, 31) mindestens ein Trägerelement (32) aufweisen, an denen mehrere Arbeitselemente (33, 34) zum Aufnehmen jeweils eines einzelnen Produkts (P) angeordnet sind.

7. Verpackungsmaschine nach den beiden vorhergehenden Ansprüchen, **dadurch gekennzeichnet, dass** die Stirnseiten des mindestens einen Trägerelements (32) zum Absetzen auf die besagten Auflageflächen (26) vorgesehen sind.

8. Verpackungsmaschine nach einem der vorhergehenden Ansprüche, **dadurch gekennzeichnet, dass** das erste Kupplungselement (24) und/oder das zweite Kupplungselement (38) zum Aneinanderkuppeln pneumatisch beaufschlagbar sind.

9. Verpackungsmaschine nach einem der vorhergehenden Ansprüche, **dadurch gekennzeichnet, dass** bei geschlossener Kupplung Steuersignale für das jeweils angekuppelte Werkzeug (30, 31) über elektrische Kontakte übermittelbar sind.

10. Verpackungsmaschine nach einem der vorhergehenden Ansprüche, **dadurch gekennzeichnet, dass** bei geschlossener Kupplung Steuersignale für das jeweils angekuppelte Werkzeug (30, 31) berührungslos übermittelbar sind.

11. Verpackungsmaschine nach einem der vorhergehenden Ansprüche, **dadurch gekennzeichnet, dass** die Kupplung selbstsichernd und mit einer Zustandsabfragefunktion ausgebildet ist.

12. Verpackungsmaschine nach einem der vorhergehenden Ansprüche, **dadurch gekennzeichnet, dass** der mindestens eine Roboter (20) hängend angeordnet ist.

13. Verpackungsmaschine nach einem der vorhergehenden Ansprüche, **dadurch gekennzeichnet, dass** der mindestens eine Roboter (20) zum Ankuppeln mindestens eines Werkzeugs (30, 31) ausgebildet ist, welches zum Ansaugen oder zum Ergreifen von Produkten (P) und zum jeweiligen Überführen in Packmaterial (V) ausgebildet ist.

14. Verpackungsmaschine nach einem der vorhergehenden Ansprüche, **dadurch gekennzeichnet, dass** die Maschine (1) zur Aufnahme von aufgerichteten Verpackungen (V) in Form von Kartonagen eines vorgeschalteten Kartonaufrichters ausgebildet ist.

## Claims

1. A packaging machine (1) comprising a frame (2) and having infeed areas (6, 10) opening into the interior of the frame (2) for products (P) to be packaged on the one hand and for packaging material (V) on the other hand and having a discharge area (15) leading out of the interior of the frame (2) for the products (P) introduced into the packaging material (V) and having at least one robot (20) that can travel within the frame (2) to which various change-out tools (30, 31) can be coupled, each of the tools (30, 31) being designed for receiving at least one, preferably a plurality of the delivered products (P) and for placing the same in said packaging material (V), and a first coupling element (24) being attached to the at least one robot (20) that can be coupled to a second coupling element (38) of a corresponding tool (30, 31), forming a coupling, and an electronic controller (14) being provided for controlling the coupling and releasing of the first and second coupling elements (24, 38), **characterized in that** mounting elements (25) for supporting tools (30, 31) not currently being used for packaging are disposed within the frame (2), that the mounting elements (25) are connected to the frame (2), that the mounting elements (25) are disposed in the area of the upper half of the frame (2), and that the tools (30, 31) can be placed in the mounting elements (25) such that the at least one robot (20) couples to the second coupling element (38) from below.

2. The packaging machine according to claim 1, **characterized in that** the mounting elements (25) are disposed on at least one support profile (27) connected to the frame (2).

3. The packaging machine according to any one of the preceding claims, **characterized in that** the at least one support profile (27) protrudes beyond the frame (2).

4. The packaging machine according to any one of the preceding claims, **characterized in that** the second coupling element (38) faces upward when packaging the products (P) and the working elements (33, 34) face downward.

5. The packaging machine according to any one of the preceding claims, **characterized in that** the mounting elements (25) comprise contact surfaces (26) on which the tools (30, 31) can be placed, preferably on the end faces thereof.

6. The packaging machine according to any one of the preceding claims, **characterized in that** the tools (30, 31) comprise at least one support element (32) on which a plurality of working elements (33, 34) are disposed for receiving one individual product (P) each.

7. The packaging machine according to both of the preceding claims, **characterized in that** the end faces of the at least one support element (32) are provided for being placed on said contact surfaces (26).

8. The packaging machine according to any one of the preceding claims, **characterized in that** the first coupling element (24) and/or the second coupling element (38) can be pneumatically actuated for coupling to each other.

9. The packaging machine according to any one of the preceding claims, **characterized in that** when the coupling is closed control signals can be transmitted via electrical contacts for the particular tool (30, 31) that is coupled.

10. The packaging machine according to any one of the preceding claims, **characterized in that** when the coupling is closed control signals can be transmitted in a non-contacting manner for the particular tool (30, 31) that is coupled.

11. The packaging machine according to any one of the preceding claims, **characterized in that** the coupling is self-locking and has a state query function.

12. The packaging machine according to any one of the preceding claims, **characterized in that** the at least one robot (20) is disposed in a suspended manner.

13. The packaging machine according to any one of the preceding claims, **characterized in that** the at least one robot (20) is designed for coupling to at least one tool (30, 31) designed for suctioning or for gripping products (P) and for transporting the same into the packaging material (V).

14. The packaging machine according to any one of the preceding claims, **characterized in that** the machine (1) is designed for receiving set up packaging (V) in the form of cartons from a carton setup machine disposed upstream.

## Revendications

1. Machine d'emballage (1) avec un châssis de cadre (2), avec des zones d'alimentation (6, 10) débouchant à l'intérieur du châssis de cadre (2) pour des produits (P) devant être emballés d'une part et pour du matériau d'emballage (V) d'autre part, et une zone d'évacuation (15) quittant l'intérieur du châssis de cadre (2) pour les produits (P) mis en place dans le matériau d'emballage (V) ainsi qu'avec au moins un robot (20) déplaçable au sein du châssis de cadre (2), auquel peuvent être accouplés des outils (30, 31) remplaçables différents, sachant que les différents outils (30, 31) se présentent sous une forme leur permettant de saisir au moins un, de préférence plusieurs des produits (P) délivrés et de placer ces derniers dans ledit matériau d'emballage (V), et qu'un premier élément d'accouplement (24) est fixé à l'au moins un robot (20), qui peut être couplé avec respectivement un second élément d'accouplement (38) d'un outil respectif (30, 31) en formant un accouplement, et qu'il est prévu une commande électronique (14), qui commande l'accouplement et le désengagement du premier élément d'accouplement depuis le second élément d'accouplement respectif (24, 38), **caractérisée en ce que** des supports (25) pour stocker les outils (30, 31) qui ne sont pas actuellement utilisés pour l'emballage sont disposés au sein du châssis de cadre (2), que les supports (25) sont reliés avec le châssis de cadre (2), que les supports (25) sont disposés dans la zone de la moitié supérieure du châssis de cadre (2) et que les outils (30, 31) peuvent être placés sur les supports (25) de telle manière que l'au moins un robot (20) s'accouple depuis le bas au second élément d'accouplement (38).

2. Machine d'emballage selon la revendication 1, **caractérisée en ce que** les supports (25) sont disposés sur au moins un profilé support (27) relié au châssis de cadre (2).

3. Machine d'emballage selon l'une des revendications précédentes, **caractérisée en ce que** l'au moins un profilé support (27) fait saillie au-dessus du châssis de cadre (2).

4. Machine d'emballage selon l'une des revendications précédentes, **caractérisée en ce que** lors de l'emballage des produits (P), le second élément d'accouplement (38) est dirigé vers le haut et les éléments de travail (33, 34) sont dirigés vers le bas.

5. Machine d'emballage selon l'une des revendications précédentes, **caractérisée en ce que** les supports (25) présentent des surfaces de support (26), sur lesquelles peuvent être déposés les outils (30, 31), de préférence à la face.

6. Machine d'emballage selon l'une des revendications précédentes, **caractérisée en ce que** les outils (30, 31) présentent au moins un élément porteur (32), auxquels sont disposés plusieurs éléments de travail (33, 34) pour saisir respectivement un produit individuel (P).

7. Machine d'emballage selon les deux revendications précédentes, **caractérisée en ce que** les faces frontales de l'au moins un élément porteur (32) sont prévues pour la dépose sur lesdites surfaces de support (26).

8. Machine d'emballage selon l'une des revendications précédentes, **caractérisée en ce que** le premier élément d'accouplement (24) et/ou le second élément d'accouplement (38) peut/peuvent être soumis à une contrainte pneumatique pour l'accouplement l'un à l'autre.

9. Machine d'emballage selon l'une des revendications précédentes, **caractérisée en ce que**, à la position fermée de l'accouplement, des signaux de commande pour l'outil (30, 31) respectivement accouplé peuvent être transmis via des contacts électriques.

10. Machine d'emballage selon l'une des revendications précédentes, **caractérisée en ce que**, à la position fermée de l'accouplement, des signaux de commande pour l'outil (30, 31) respectivement accouplé peuvent être transmis sans contact.

11. Machine d'emballage selon l'une des revendications précédentes, **caractérisée en ce que** l'accouplement est autobloquant et intègre une fonctionnalité d'interrogation d'état.

12. Machine d'emballage selon l'une des revendications précédentes, **caractérisée en ce que** l'au moins un robot (20) est suspendu.

13. Machine d'emballage selon l'une des revendications précédentes, **caractérisée en ce que** l'au moins un robot (20) se présente sous une forme pour accoupler au moins un outil (30, 31), qui se présente sous une forme pour aspirer ou pour saisir des produits (P) et les transmettre respectivement au matériau d'emballage (V).

14. Machine d'emballage selon l'une des revendications précédentes, **caractérisée en ce que** la machine (1) se présente sous une forme pour saisir des emballages redressés (V) en forme de cartonnages d'une formeuse de cartons installée en amont.
